# EUROPÄISCHE PATENTSCHRIFT

(11) **EP 2 002 998 B1**
(45) Veröffentlichungstag und Bekanntmachung des Hinweises auf die Patenterteilung: **14.10.2009**
(21) Anmeldenummer: 07011654.6
(22) Anmeldetag: 14.06.2007
(51) Int. Cl.: B60D 5/00, B61D 17/22, B62D 47/02

(54) **Zwei gelenkig miteinander gekuppelte Fahrzeuge mit einem Übergang mit mindestens einem Balg sowie einer Kupplungsvorrichtung, umfassend zwei Kuppelelemente**
Two interconnected articulated vehicles with at least one bellows and a coupling device comprising two coupling elements
Véhicules articulés couplés ensemble dotés d'un passage ayant au moins un soufflet et ayant un dispositif de couplage comportant deux éléments de couplage

(43) Veröffentlichungstag der Anmeldung: 17.12.2008
(73) Patentinhaber: Hübner GmbH, 34123 Kassel (DE)
(72) Erfinder: Goebels, Andre, 34134, Kassel (DE); Rudolph, Hans-Jacob, 34308, Bad Emstal (DE)
(74) Vertreter: Walther, Walther & Hinz GbR

(56) Entgegenhaltungen:
- EP-A- 0 418 594
- EP-A- 1 702 829
- WO-A-96/36519
- FR-A- 2 858 287
- US-A- 2 931 317

## Beschreibung

Die vorliegende Erfindung betrifft zwei gelenkig miteinander gekuppelte Fahrzeuge, z. B. Schienenfahrzeuge oder Gelenkbusse, mit einem Übergang mit mindestens einem Balg sowie einer Kupplungsvorrichtung, umfassend zwei Kuppelelemente.

Bei miteinander gekuppelten Fahrzeugen, z. B. Schienenfahrzeugen oder auch Gelenkbussen, ist zwischen den einzelnen Fahrzeugteilen ein sogenannter Übergang vorgesehen. Ein solcher Übergang umfasst rein begrifflich eine Übergangsbrücke, um Personen den Wechsel von einem Fahrzeugteil in das andere Fahrzeugteil zur ermöglichen sowie einen im Querschnitt in etwa rechteckförmigen Balg, der zumindest die Brücke, zumeist allerdings auch das Gelenk, durch das die beiden Fahrzeugteile miteinander in Verbindung stehen, umgibt.

Zur Befestigung des Balges an der Stirnseite des Fahrzeugs ist aus der EP 1 702 829 A1 bekannt, an der Stirnseite des Fahrzeugs einen umlaufenden Befestigungsrahmen vorzusehen, der einen am Balg angeordneten Wulst klemmbar aufnimmt. Zur Erzeugung der Klemmkraft auf den Wulst sind am Befestigungsrahmen angeordnete Spannhebel vorgesehen, die nach Verschwenken den Wulst des Balges in dem Befestigungsrahmen gepresst halten.

In Bezug auf die Verbindung der beiden Fahrzeugteile durch den Balg gibt es nun drei verschiedene Ausführungsformen. So ist nach einer ersten Ausführungsform vorgesehen, dass der Balg unmittelbar an der Stirnseite des Wagenkastens des einen Fahrzeugteils angeordnet ist, wobei sowohl der Balg endseitig als auch der Fahrzeugkasten jeweils einen Kuppelrahmen aufweisen, durch den die Verbindung erfolgt. Denkbar ist aber auch, dass die balgseitige Stirnwand des Fahrzeugs den Kuppelrahmen bildet. Nach einer anderen Ausführungsform ist der Balg zweigeteilt, wobei die beiden Teile des Balges an ihren einander zugewandten stirnseitigen Enden jeweils einen Kuppelrahmen aufweisen, wobei die beiden Kuppelrahmen ebenfalls miteinander verbindbar sind.

Die vorliegende Erfindung betrifft sämtliche der vorgenannten Ausführungsformen.

Die Verbindung zweier Kuppelrahmen ist aus dem Stand der Technik z. B. aus der US 2,931,317, aber insbesondere aus der EP 0 329 031 B1 und auch aus der EP 0 418 594 B1 bekannt. Aus der US 2,931,317 ist bekannt, stirnseitig am Balg Zapfen vorzusehen, die in entsprechende Aufnahmen an der Stirnseite des Fahrzeugs eingeführt werden. Die Zapfen werden in den entsprechenden Aufnahmen durch Federdruck gehalten. Bei den aus dem Stand der Technik gemäß der EP 0 418 594 B1 bekannten zu kuppelnden Rahmen sind wechselweise Haken und Ösen vorgesehen, wobei die Haken durch ein umlaufendes Drahtseil miteinander in Verbindung stehen, das durch einen Hebel betätigbar ist. Durch Betätigung des Drahtseils werden die Haken verschoben und so in Eingriff mit den Ösen des gegenüberliegenden Kuppelrahmens gebracht. Darüber hinaus weisen die beiden Kuppelrahmen ineinander greifende Zapfen bzw. Zapfenaufnahmen auf, die zum einen der Zentrierung der beiden Kuppelrahmen relativ zueinander dienen, zum anderen aber auch dafür sorgen, dass die beiden Kuppelrahmen im miteinander verbundenen Zustand nicht relativ zueinander beweglich sind. Diese bekannte Vorrichtung zum Kuppeln zweier Kuppelrahmen ist auf Grund der Vielzahl der unterschiedlichen Bauteile sehr teuer. Maßgeblich ist allerdings nicht nur die Vielzahl der einzelnen unterschiedlichen Bauteile, sondern auch die reine Anzahl der Bauteile, die erforderlich ist, um zwei Kuppelrahmen zu kuppeln. Je größer die Anzahl der einzelnen Bauelemente ist, umso höher ist das Gewicht. Insbesondere im Busbereich ist auf Grund der nicht zu überschreitenden Achslasten darauf zu achten, dass die Konstruktionen leicht sind.

Der Erfindung liegt daher die Aufgabe zu Grunde, eine Kupplungsvorrichtung der eingangs genannten Art bereitzustellen, die zwei Kuppelrahmen umfasst, die nur eine geringe Anzahl unterschiedlicher Teile erforderlich macht und die darüber hinaus ein geringeres Gewicht aufweist als dies beim Stand der Technik der Fall ist.

Zur Lösung der Aufgabe wird bei zwei miteinander gekuppelten Fahrzeugen mit einem Übergang und mindestens einem Balg sowie einer Kupplungsvorrichtung mit zwei Kuppelrahmen erfindungsgemäß vorgeschlagen, dass die Kuppelrahmen miteinander in Eingriff bringbare männliche und weibliche Kupplungsglieder aufweisen, wobei zur Verriegelung der männlichen Kupplungsglieder in den weiblichen Kupplungsgliedern jeweils ein Riegelglied vorgesehen ist, wobei das Riegelglied durch das jeweilige Kuppelrahmen verschieblich geführt ist, wobei das Riegelglied mit einem Kraftübertragungsglied in Verbindung steht, das in dem jeweiligen Kuppelrahmen verschieblich geführt ist, wobei das Kraftübertragungsglied sowohl Zug- als auch Schubkräfte überträgt. Das Kuppelelement ist hierbei ein Kuppelrahmen, so dass bei zwei Balghälften die Verbindung durch die Kupplung zweier Kuppelrahmen erfolgt.

Bei einem einheitlichen Balg ist nach einer anderen Variante ein Kuppelrahmen als Kuppelelement stirnseitig am Balgende angeordnet, wobei die Stirnseite des Wagenkastens einen weiteren korrespondierenden Kuppelrahmen besitzt. Schließlich kann das Kuppelelement die Stirnwand des Wagenkastens oder Fahrzeugs sein. Das heißt, dass die männlichen und/oder weiblichen Kupplungsglieder unmittelbar an der Stirnwand des Fahrzeugs angeordnet sind.

Hieraus wird deutlich, dass die gewählte Konstruktion - abgesehen von den beiden Kuppelrahmen - im Wesentlichen nur noch vier unterschiedliche Bauteile umfasst, nämlich männliche und weibliche Kupplungsglieder, ein Riegelglied sowie ein Kraftübertragungsglied. Dies rührt daher, dass die männlichen und weiblichen Kupplungsglieder, die miteinander in Eingriff bringbar und durch das Riegelglied auch miteinander zu verriegeln sind, zwei Aufgaben übernehmen. Zum einen ist dies die Aufgabe der Zentrierung, und zwar insofern, als diese beiden Glieder ineinander einlaufen, bevor sie miteinander verriegelt werden und zum anderen übernehmen sie auch die eigentliche Aufgabe der Verrieglung. Das heißt, dass durch die formschlüssige Verbindung der männlichen Kupplungsglieder mit den weiblichen Kupplungsgliedern sowohl Kräfte parallel zur Längsachse des Fahrzeugs übertragen werden können als auch Kräfte in Querrichtung zur Fahrzeuglängsachse, d. h. durch die männlichen und weiblichen Kupplungsglieder wird in der Verriegelungsstellung eine Bewegung der beiden derart verbundenen Kuppelrahmen relativ miteinander verhindert.

Vorteilhafte Merkmale und Ausführungsformen zu der Erfindung ergeben sich aus den Unteransprüchen.

In diesem Zusammenhang ist im Einzelnen vorgesehen, dass das Kuppelelement z. B. in Form eines Kuppelrahmens eine Nut zur Aufnahme des Kraftübertragungsgliedes und des Riegelgliedes aufweist, wobei das weibliche Kupplungsglied im Bereich der Nut derart angeordnet ist, dass das Riegelglied zur Verriegelung des männlichen Kupplungsgliedes in dem weiblichen Kupplungsglied in das weibliche Kuppelglied einführbar ist. Hieraus wird deutlich, dass im verriegelten Zustand der beiden Kupplungsglieder das Riegelglied eine formschlüssige Verbindung zwischen den beiden Kupplungsgliedern in sämtliche drei Raumrichtungen bewirkt.

Nach einem besonderen Merkmal der Erfindung ist vorgesehen, dass das Kraftübertragungsglied in Richtung seiner Längsachse frei beweglich in der Nut des Kuppelelements oder Kuppelrahmens angeordnet ist. Frei beweglich bedeutet in diesem Zusammenhang, dass das Kraftübertragungsglied lediglich in der Nut einliegt, an seinen Enden jedoch frei beweglich ist, also nicht an einem Ende in irgendeiner Weise in der Nut fixiert ist. Das bedeutet, dass aufwendige Bowdenzug-Konstruktionen, wie sie nach dem Stand der Technik zum Teil erforderlich sind, hier nicht notwendig werden. Dies liegt im Wesentlichen darin begründet, dass das Kraftübertragungsglied starr, aber dennoch hoch biegsam ausgebildet ist, also beispielsweise aus Federstahl besteht oder aber auch aus glasfaserverstärktem Kunststoff hergestellt ist und insofern in der Lage ist, sowohl Zug- als auch Druckkräfte zu übertragen. Insbesondere ist in diesem Zusammenhang vorgesehen, dass zwei Kraftübertragungsglieder jeweils in Richtung ihrer Längsachse frei beweglich in der umlaufenden Nut des Kupplungsrahmens angeordnet sind. Das heißt, dass das Kraftübertragungsglied nicht notwendigerweise z. B. in einem in etwa rechteckförmigen Kuppelrahmen rundum geführt ist, sondern dass vielmehr beispielsweise diagonal einander gegenüberliegend zwei derartige Kraftübertragungsglieder in der Nut des Kuppelrahmens einliegend vorgesehen sind, die für die Bewegung der Riegelglieder sorgen. Dies hat den Vorteil, dass ein jedes Kraftübertragungsglied nur um eine Ecke z. B. des Kuppelrahmens geführt werden muss und nicht um deren vier, wie dies der Fall wäre, wenn das Kraftübertragungsglied über den gesamten Umfang des Kuppelrahmens geführt werden würde. Hierdurch kann die Reibung im Bereich der Nut, insbesondere im Eckbereich, stark vermindert werden, so dass die Betätigung zum Ent- oder Verriegeln wesentlich erleichtert wird.

Das Riegelglied, das die Verriegelung des männlichen und des weiblichen Kupplungsgliedes vornimmt, ist durch eine Klemmverbindung mit dem Kraftübertragungsglied, z. B. einem Stab aus Federstahl oder aus glasfaserverstärktem Kunststoff, verbunden. Das Riegelglied kann hierbei aus zwei scheibenförmigen Platten bestehen, die auf ihren einander zuweisenden Flächen eine Nut aufweisen, die zur Aufnahme des Kraftübertragungsgliedes dient. Durch die Verbindung der beiden Platten wird nun eine reibschlüssige Verbindung zu dem Kraftübertragungsglied hergestellt.

Bereits an anderer Stelle wurde erläutert, dass das männliche und das weibliche Kupplungsglied bei Kupplung beispielsweise zweier Kuppelrahmen auch die Aufgabe der Zentrierung übernehmen. In diesem Zusammenhang ist insbesondere vorgesehen, dass das weibliche Kupplungsglied eine Einlaufschräge für das männliche Kupplungsglied aufweist. Vorteilhaft besitzt allerdings auch das männliche Kupplungsglied, das einen Riegelbolzen zur Aufnahme durch das weibliche Kupplungsglied aufweist, im Bereich des freien Endes des Riegelbolzens eine Spitze. Der Riegelbolzen selbst weist darüber hinaus ebenfalls eine Öffnung zur Aufnahme des Riegelgliedes auf.

Zur Betätigung des Kraftübertragungsgliedes ist ein am Kuppelrahmen oder Kuppelelement angeordneter Hebel vorgesehen, der mit dem Kraftübertragungsglied in Verbindung steht.

Anhand der Zeichnungen wird die Erfindung nachstehend beispielhaft näher erläutert.
- Figur 1: zeigt schematisch eine Verbindung zwischen zwei Balghälften durch zwei Kuppelrahmen zwischen zwei Fahrzeugteilen in einer Seitenansicht;
- Figur 2: zeigt eine Frontansicht auf einen Kuppelrahmen;
- Figur 3a: zeigt das männliche Kupplungsglied in einer Seitenansicht;
- Figur 3b: zeigt eine Ansicht von oben auf das männliche Kupplungsglied;
- Figur 4a: zeigt das weibliche Kupplungsglied in einer Seitenansicht;
- Figur 4b: zeigt eine Ansicht von oben auf das weibliche Kupplungsglied;
- Figur 4c: zeigt das weibliche Kupplungsglied in einer weiteren Ansicht;
- Figur 5a: zeigt das Riegelglied in einer Seitenansicht;
- Figur 5b: zeigt eine weitere Ansicht des Riegelgliedes gemäß Figur 5a;
- Figur 6a: zeigt eine Stellung, bei der sich das männliche Kupplungsglied im weiblichen Kupplungsglied befindet;
- Figur 6b: zeigt eine Ansicht gemäß Figur 6a, wobei jedoch das Riegelglied das weibliche und das männliche Kupplungsglied miteinander verriegelt;
- Figur 6c: zeigt einen Schnitt gemäß der Linie Vlc - Vlc aus Figur 6b;
- Figur 7: zeigt die Einzelheit X aus Figur 2 in vergrößerter Darstellung.

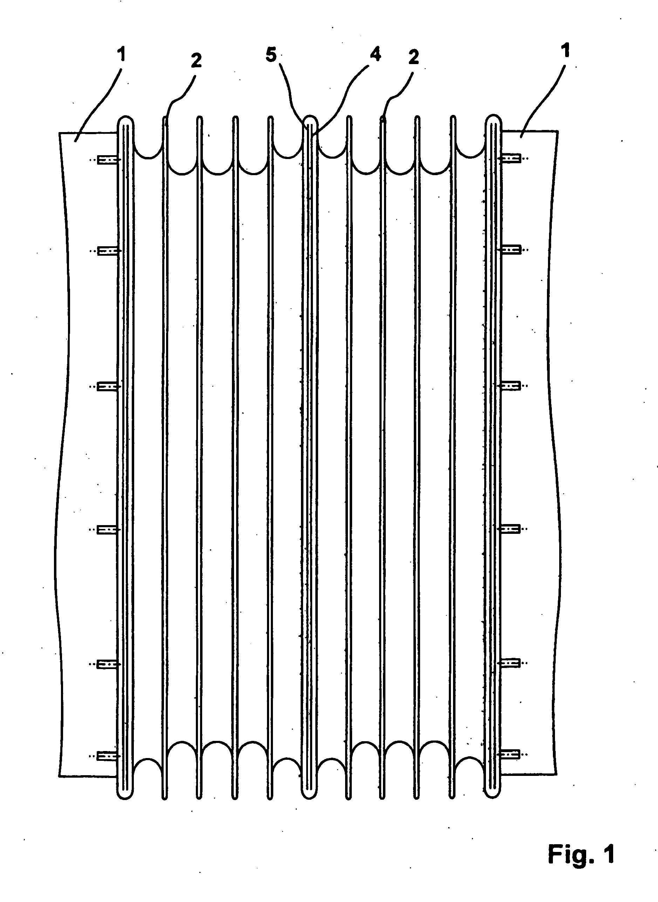

Gemäß Figur 1 sind die beiden Fahrzeugteile mit 1 bezeichnet, wobei zwischen den beiden Fahrzeugteilen der aus zwei Hälften 2 bestehende Balg angeordnet ist. Die beiden Balghälften 2 weisen an ihrem einander zugewandten stirnseitigen Ende jeweils einen Kuppelrahmen 4, 5 auf, durch die die beiden Balghälften 2 miteinander kuppelbar sind.

Es sei an dieser Stelle ausdrücklich darauf hingewiesen, dass durch die Erfindung auch eine Ausführungsform umfasst ist, bei der der Balg unmittelbar mit dem Wagenkasten gekuppelt wird, dass also insbesondere an dem Wagenkasten ein Kuppelrahmen fest installiert ist, der mit dem Kuppelrahmen des Balges kuppelbar ist oder aber die Stirnwand des Wagenkastens den Kuppelrahmen bildet.

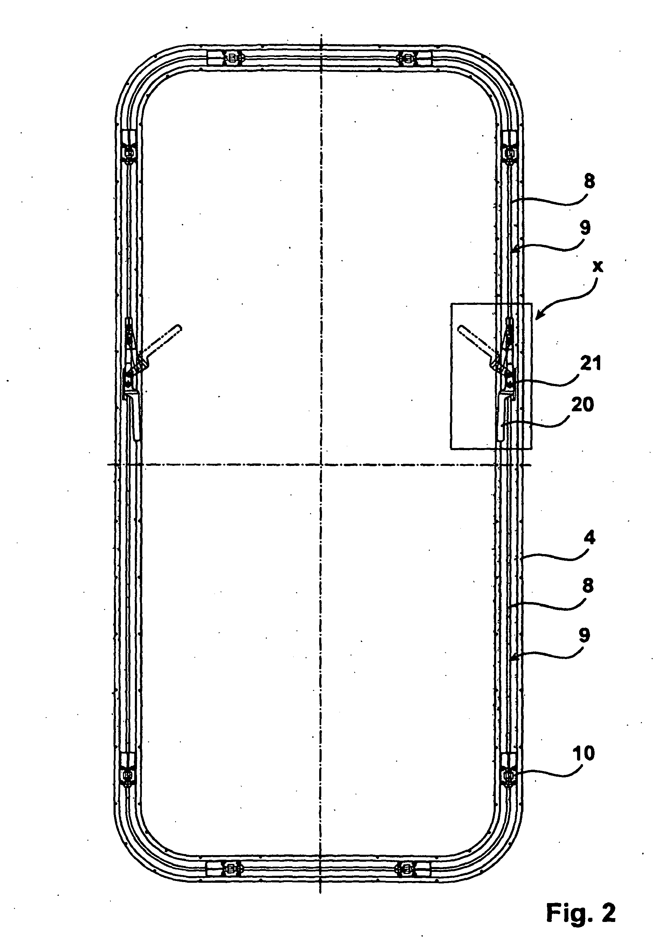

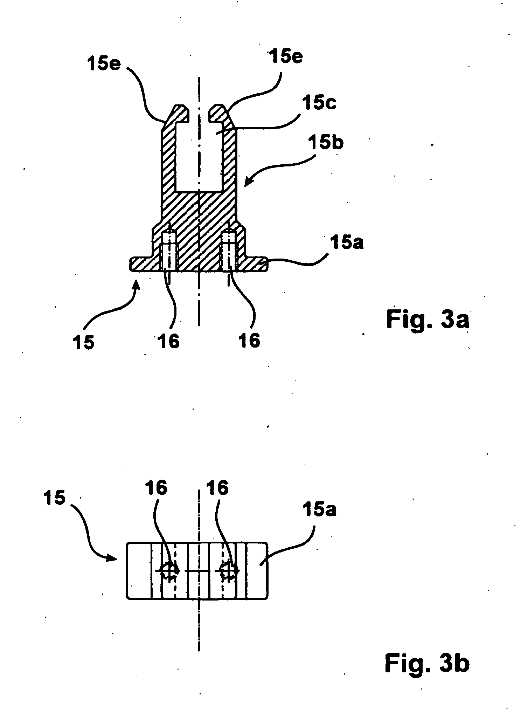

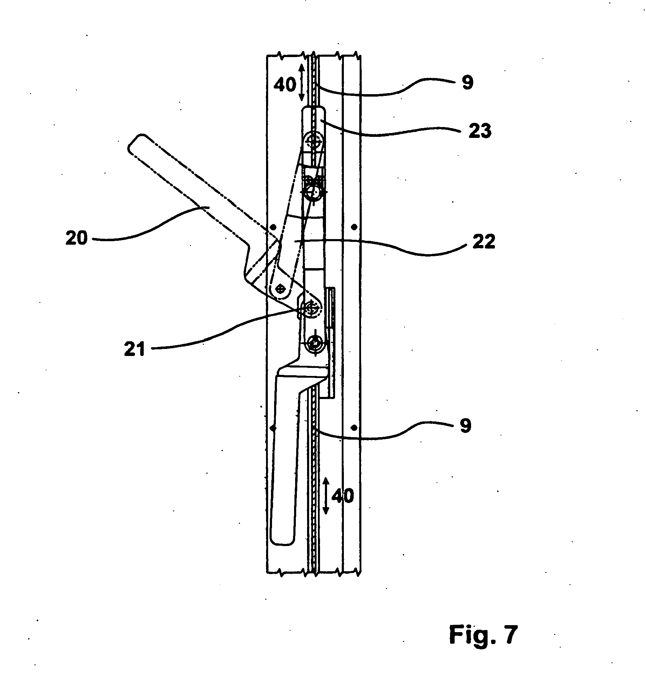

Die Ausbildung des Kuppelrahmens ergibt sich nun aus Figur 2. Im vorliegenden Fall weist der in Figur 2 dargestellte Kuppelrahmen lediglich weibliche Kupplungsglieder 10 auf und keine männlichen Kupplungsglieder 15. Es besteht die Möglichkeit, sowohl männliche als auch weibliche Kupplungsglieder kombiniert an einem Kuppelrahmen anzuordnen oder eben - wie sich dies aus Figur 2 ergibt - lediglich eine Sorte von Kupplungsgliedern an einem Kuppelrahmen anzuordnen. Die in dem Kuppelrahmen 4 angeordneten weiblichen Kupplungsglieder besitzen - wie bereits ausgeführt - das Bezugszeichen 10. Die korrespondierenden hierzu vorgesehenen männlichen Kupplungsglieder 15 sind in den Figuren 3a und 3b dargestellt. Der Kuppelrahmen 4 besitzt eine Nut 8, in der das Kraftübertragungsglied 9 geführt ist, das mit dem Riegelglied 30 in Verbindung steht. Betätigt wird das Kraftübertragungsglied 9 durch den Hebel 20, der schwenkbeweglich durch eine Achse 21 mit dem Kuppelrahmen 4 verbunden ist, wie sich dies im Einzelnen aus Figur 7 ergibt. Der Hebel 20 ist drehbeweglich mit einer Schubstange 22 verbunden, die mit einem Schlitten 23 in Verbindung steht, durch den das Kraftübertragungsglied 9 klemmbar erfassbar ist. Durch Verschwenken des Hebels - wie aus Figur 7 erkennbar - wird das Kraftübertragungsglied 9 in Richtung des Doppelpfeils 40 verschoben.

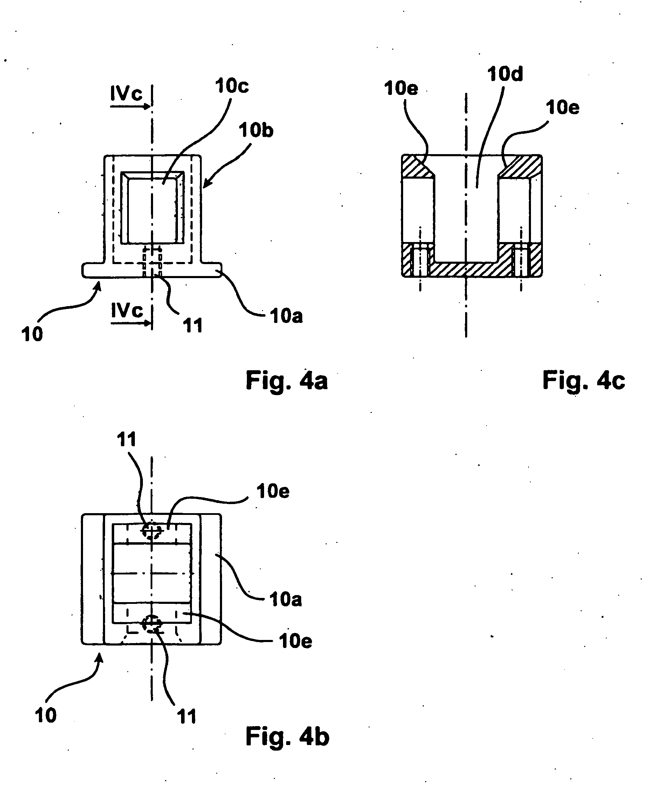

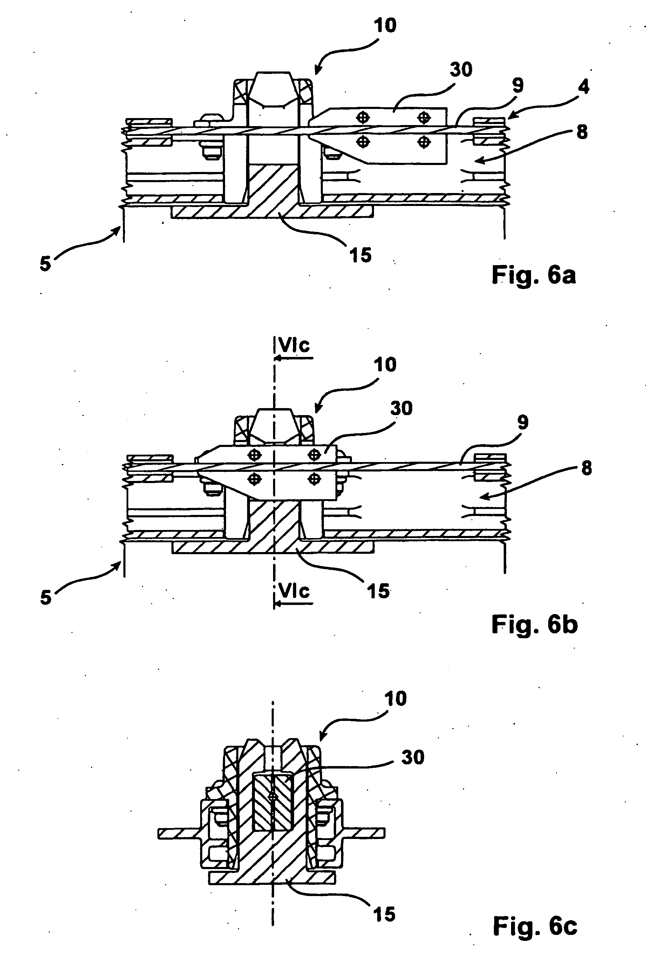

Das weibliche Kupplungsglied 10 ist in den Figuren 4a, 4b, 4c in verschiedenen Ansichten dargestellt. Das männliche Kupplungsglied 15 ergibt sich in seiner Ausbildung aus den Figuren 3a und 3b. Erkennbar weist das weibliche Kupplungsglied 10 eine T-förmige Gestalt auf, wobei der Steg 10a Bohrungen 11 zur Aufnahme von nicht dargestellten Schrauben aufweist, mit welchen das jeweilige weibliche Kupplungsglied 10 an dem Kuppelrahmen 4 fixierbar ist. Das weibliche Kupplungsglied ist in entsprechenden Aussparungen in der Nut des Kupplungsrahmens angeordnet; in jedem Fall liegt das männliche Kuppelungsglied 15 in dem weiblichen Kupplungsglied 10 derart ein, dass das in der Nut befindliche Riegelglied 30 die Verriegelung vornehmen kann. Hierbei besitzt der Schenkel 10b des Kupplungsgliedes 10 eine Öffnung 10c zur Aufnahme des Riegelgliedes 30 gemäß den Figuren 6a, 6b.

Korrespondierend hierzu weist der Schenkel 15b des ebenfalls T-förmigen männlichen Kupplungsgliedes in Form des Riegelbolzens darüber hinaus ebenfalls eine Öffnung 15c auf, die gleichfalls der Aufnahme des Riegelgliedes 30 gemäß den Figuren 6a, 6b dient. Die Ausbildung und Anordnung der Öffnungen 10c und 15c ist derart, dass diese miteinander fluchten, so dass das Riegelglied 30 in diese beiden Öffnungen einlaufen kann, wenn sich das männliche Kupplungsglied 15 in dem weiblichen Kupplungsglied 10 befindet (Fig. 6a bis 6c). Das mit 15 bezeichnete männliche Kupplungsglied gemäß den Figuren 3a, 3b besitzt ebenfalls einen Steg 15a zur Fixierung an dem Kuppelrahmen 4, 5 mittels Schrauben durch die Schraublöcher 16.

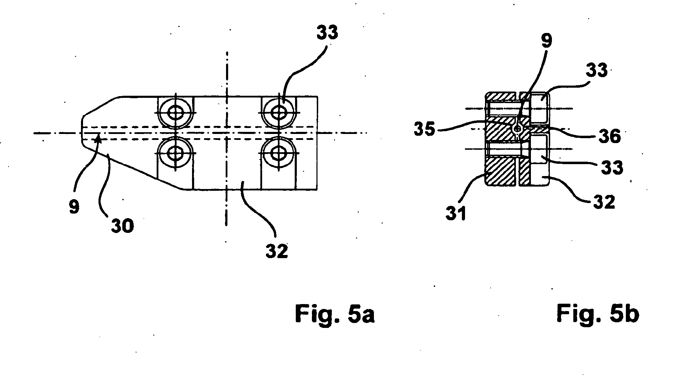

Das Riegelglied 30 umfasst zwei Platten 31, 32, die durch Schrauben 33 miteinander verbunden sind (Fig. 5a, Fig. 5b). Auf ihren einander zugewandten Seiten weisen die Platten 31, 32 jeweils eine halbkreisförmige Nut 35, 36 auf, die der Aufnahme des Kraftübertragungsgliedes 9 dient, wobei das Kraftübertragungsglied 9 als biegsame Stange durch die beiden Platten im Bereich der Nut 35, 36 klemmend erfasst wird.

Das weibliche Kupplungsglied 10 weist im Bereich des Einlaufs 10d vier Öffnungen 10c sowie die beiden Einlaufschrägen 10e auf, um dem männlichen Kupplungsglied mit seinen ebenfalls korrespondierend hierzu angeordneten eine Spitze bildenden Einlaufschrägen 15e das Einlaufen bei der Zentrierung zu erleichtern.

Der Vorgang des Verriegelns ergibt sich nunmehr im Einzelnen aus den Figuren 6a, 6b. Figur 6a zeigt eine Stellung, bei der sich das männliche Kupplungsglied 15 bereits in dem weiblichen Kupplungsglied 10 befindet, kurz bevor das Riegelglied 30 die beiden Kupplungsglieder in deren Öffnungen 10c, 15c verriegelt, wie sich dies im Einzelnen aus Figur 6b ergibt. Figur 6c zeigt einen Schnitt gemäß der Linie Vlc - Vlc aus Figur 6b, wobei hier im Einzelnen erkennbar ist, wie durch das Riegelglied 30 die Verriegelung sowohl des männlichen als auch des weiblichen Kupplungsgliedes erfolgt.

## Patentansprüche

1. Zwei gelenkig miteinander gekuppelte Fahrzeuge (1), z. B. Schienenfahrzeuge oder Gelenkbusse mit einem Übergang mit mindestens einem Balg (2) sowie einer Kupplungsvorrichtung, umfassend zwei Kuppelrahmen (4, 5), wobei die Kuppelrahmen (4, 5) miteinander in Eingriff bringbare männliche und weibliche Kupplungsglieder (10, 15) aufweisen, **dadurch gekennzeichnet daß** zur Verriegelung der männlichen Kupplungsglieder (15) in den weiblichen Kupplungsgliedern (10) jeweils ein Riegelglied (30) vorgesehen ist, wobei das Riegelglied (30) durch die jeweiligen Kuppelrahmen (4, 5) verschieblich geführt ist, wobei das Riegelglied (30) mit einem Kraftübertragungsglied (9) in Verbindung steht, das in dem jeweiligen Kuppelrahmen (4, 5) verschieblich geführt ist, wobei das Kraftübertragungsglied (9) sowohl Zug- als auch Schubkräfte überträgt.

2. Zwei miteinander gekuppelte Fahrzeuge nach Anspruch 1,
**dadurch gekennzeichnet,**
**dass** der Kuppelrahmen (4, 5) eine Nut (8) zur Aufnahme des Kraftübertragungsgliedes (9) und des Riegelgliedes (30) aufweist, wobei das weibliche Kupplungsglied (10) im Bereich der Nut (8) derart angeordnet ist, dass das Riegelglied (30) zur Verriegelung des männlichen Kupplungsgliedes (15) in dem weiblichen Kupplungsglied (10) in das weibliche Kupplungsglied (10) einführbar ist.

3. Zwei miteinander gekuppelte Fahrzeuge nach Anspruch 2,
**dadurch gekennzeichnet,**
**dass** das Kraftübertragungsglied (9) in Richtung seiner Längsachse beweglich in der Nut (8) angeordnet ist.

4. Zwei miteinander gekuppelte Fahrzeuge nach einem der voranstehenden Ansprüche,
**dadurch gekennzeichnet,**
**dass** zwei Kraftübertragungsglieder (9) jeweils in Richtung ihrer Längsachse beweglich in der Nut (8) angeordnet sind.

5. Zwei miteinander gekuppelte Fahrzeuge nach einem der voranstehenden Ansprüche,
**dadurch gekennzeichnet,**
**dass** das Kraftübertragungsglied (9) als biegsame Stange ausgebildet ist.

6. Zwei miteinander gekuppelte Fahrzeuge nach einem der voranstehenden Ansprüche,
**dadurch gekennzeichnet,**
**dass** das Riegelglied (30) durch eine Klemmverbindung mit dem Kraftübertragungsglied (9) verbunden ist.

7. Zwei miteinander gekuppelte Fahrzeuge nach einem der voranstehenden Ansprüche,
**dadurch gekennzeichnet,**
**dass** das weibliche Kupplungsglied (10) eine Einlaufschräge (10e) für das männliche Kupplungsglied (15) aufweist.

8. Zwei miteinander gekuppelte Fahrzeuge nach einem der voranstehenden Ansprüche,
**dadurch gekennzeichnet,**
**dass** das männliche Kupplungsglied (15) einen Riegelbolzen (15b) zur Aufnahme durch das weibliche Kupplungsglied (10) aufweist, wobei der Riegelbolzen (15b) im Bereich seines freien Endes eine konisch zulaufende Spitze (Pfeil 15e) aufweist.

9. Zwei miteinander gekuppelte Fahrzeuge nach Anspruch 8
**dadurch gekennzeichet,**
**dass** der Riegelbolzen (15b) eine Öffnung (15c) zur Aufnahme des Riegelgliedes (30) aufweist.

10. Zwei miteinander gekuppelte Fahrzeuge nach einem der voranstehenden Ansprüche,
**dadurch gekennzeichnet,**
**dass** das Kraftübertragungsglied (9) durch einen am Kuppelrahmen (4, 5) angeordneten Hebel (20) betätigbar ist.

11. Zwei miteinander gekuppelte Fahrzeuge nach einem der voranstehenden Ansprüche,
**dadurch gekennzeichnet,**
**dass** der Kuppelrahmen (4, 5) durch die Stirnwand des Fahrzeugs gebildet ist.

## Claims

1. Two coupled vehicles (1) such as railbound vehicles or articulated busses, with a connection with at least one bellows (2) as well as with a coupling device comprising two coupling frames (4, 5), said coupling frames (4, 5) comprising interengaging male and female coupling members (10, 15), **characterized in that** a locking member (30) is provided for respectively locking the male coupling members (15) in the female coupling members (10), said locking member (30) being slidably guided by the respective locking frames (4, 5), said locking member (30) communicating with a force transmitting member (9) that is slidably guided in the respective one of the coupling frames (4, 5), the force transmitting member (9) transmitting both tensile and shear forces.

2. Two coupled vehicles as set forth in claim 1,
**characterized in**
**that** the coupling frame (4, 5) comprises a groove (8) for receiving the force transmitting member (9) and the locking member (30), the female coupling member (10) being disposed in the region of the groove (8) so that the locking member (30) may be introduced into the female coupling member (10) in order to lock the male coupling member (15) in the female coupling member (10).

3. Two coupled vehicles as set forth in claim 2,
**characterized in**
**that** the force transmitting member (9) is disposed in the groove (8) for movement in the direction of its longitudinal axis.

4. Two coupled vehicles as set forth in any one of the previous claims,
**characterized in**
**that** two force transmitting members (9) are each disposed in the groove (8) for movement in the direction of their longitudinal axis.

5. Two coupled vehicles as set forth in any one of the previous claims,
**characterized in**
**that** the force transmitting member (9) is configured to be a flexible rod.

6. Two coupled vehicles as set forth in any one of the previous claims,
**characterized in**
**that** the locking member (30) is connected to the force transmitting member (9) through a clamp connection.

7. Two coupled vehicles as set forth in any one of the previous claims,
**characterized in**
**that** the female coupling member (10) comprises an inclined engagement portion (10e) for the male coupling member (15) to engage.

8. Two coupled vehicles as set forth in any one of the previous claims,
**characterized in**
**that** the male coupling member (15) comprises a locking bolt (15b) for reception by the female coupling member (10), said locking bolt (15b) comprising a conically tapering tip (arrow 15e) in the region of its free end.

9. Two coupled vehicles as set forth in claim 8,
**characterized in**
**that** the locking bolt (15b) comprises an opening (15c) for receiving the locking member (30).

10. Two coupled vehicles as set forth in any one of the previous claims,
**characterized in**
**that** the force transmitting member (9) is actuatable by a lever (20) disposed on the coupling frame (4, 5).

11. Two coupled vehicles as set forth in any one of the previous claims,
**characterized in**
**that** the coupling frame (4, 5) is formed by the end wall of the vehicle.

## Revendications

1. Deux véhicules (1) couplés l'un à l'autre, p. ex. des véhicules ferroviaires ou des bus articulés, avec une intercirculation avec au moins un soufflet (2) ainsi qu'avec un dispositif de couplage comprenant deux cadres de couplage (4, 5), les cadres de couplage (4, 5) comportant des organes de couplage (10, 15) mâles et femelles aptes à être mis en prise les uns avec les autres, **caractérisés en ce qu'**un organe formant verrou (30) est prévu pour verrouiller les organes de couplage mâles (15) dans les organes de couplage femelles (10), l'organe formant verrou (30) étant guidé mobile en translation par les cadres de couplage respectifs (4, 5), l'organe formant verrou (30) communiquant avec un organe de transmission de force (9) qui est guidé mobile en translation dans le cadre de couplage respectif (4, 5), l'organe de transmission de force (9) transmettant et des forces de traction et des forces de poussée.

2. Deux véhicules couplés l'un à l'autre selon la revendication 1,
**caractérisés en ce**
**que** le cadre de couplage (4, 5) comporte une gorge (8) destinée à recevoir l'organe de transmission de force (9) et l'organe formant verrou (30), l'organe de couplage femelle (10) étant disposé dans la région de la gorge (8) de telle sorte que l'organe formant verrou (30) est apte à être introduit dans l'organe de couplage femelle (10) pour verrouiller l'organe de couplage mâle (15) dans l'organe de couplage femelle (10).

3. Deux véhicules couplés l'un à l'autre selon la revendication 2,
**caractérisés en ce**
**que** l'organe de transmission de force (9) est disposé dans la gorge (8), mobile dans le sens de son axe longitudinal.

4. Deux véhicules couplés l'un à l'autre selon l'une quelconque des revendications précédentes,
**caractérisés en ce**
**que** deux organes de transmission de force (9) sont disposés dans la gorge (8), mobiles chacun dans le sens de leur axe longitudinal.

5. Deux véhicules couplés l'un à l'autre selon l'une quelconque des revendications précédentes,
**caractérisés en ce**
**que** l'organe de transmission de force (9) est réalisé sous forme de tige flexible.

6. Deux véhicules couplés l'un à l'autre selon l'une quelconque des revendications précédentes,
**caractérisés en ce**
**que** l'organe formant verrou (30) est relié à l'organe de transmission de force (9) par une liaison par serrage.

7. Deux véhicules couplés l'un à l'autre selon l'une quelconque des revendications précédentes,
**caractérisés en ce**
**que** l'organe de couplage femelle (10) comporte une surface oblique (10e) permettant à l'organe de couplage mâle (15) de s'y engager.

8. Deux véhicules couplés l'un à l'autre selon l'une quelconque des revendications précédentes,
**caractérisés en ce**
**que** l'organe de couplage mâle (15) comporte une cheville formant verrou (15b) destinée à être reçue par l'organe de couplage femelle (10), la cheville formant verrou (15b) comportant une pointe conique (flèche 15e) à la hauteur de son extrémité libre.

9. Deux véhicules couplés l'un à l'autre selon la revendication 8,
**caractérisés en ce**
**que** la cheville formant verrou (15b) comporte une ouverture (15c) destinée à recevoir l'organe formant verrou (30).

10. Deux véhicules couplés l'un à l'autre selon l'une quelconque des revendications précédentes,
**caractérisés en ce**
**que** l'organe de transmission de force (9) est apte à être actionné par un levier (20) disposé sur le cadre de couplage (4, 5).

11. Deux véhicules couplés l'un à l'autre selon l'une quelconque des revendications précédentes,
**caractérisés en ce**
**que** le cadre de couplage (4, 5) est formé par la paroi d'extrémité du véhicule.
